(19) **Europäisches Patentamt / European Patent Office / Office européen des brevets**

(11) **EP 4 245 045 B1**

(12) # EUROPEAN PATENT SPECIFICATION

(45) Date of publication and mention
of the grant of the patent:
**09.10.2024 Bulletin 2024/41**

(21) Application number: **21810992.4**

(22) Date of filing: **11.11.2021**

(51) International Patent Classification (IPC):
$H04W\ 4/06^{(2009.01)}$ $H04L\ 1/16^{(2023.01)}$
$H04L\ 1/18^{(2023.01)}$ $H04L\ 1/00^{(2006.01)}$
$H04W\ 36/00^{(2009.01)}$

(52) Cooperative Patent Classification (CPC):
**H04W 4/06; H04W 36/0007;** H04L 2001/0093

(86) International application number:
**PCT/EP2021/081421**

(87) International publication number:
**WO 2022/101360 (19.05.2022 Gazette 2022/20)**

(54) **METHOD, APPARATUS AND COMPUTER PROGRAM PRODUCT FOR PROVIDING SERVICE CONTINUITY FOR MULTICAST AND BROADCAST SERVICE**

VERFAHREN, VORRICHTUNG UND COMPUTERPROGRAMMPRODUKT ZUR BEREITSTELLUNG VON DIENSTKONTINUITÄT FÜR MULTICAST- UND BROADCAST-DIENST

PROCÉDÉ, APPAREIL ET PRODUIT DE PROGRAMME INFORMATIQUE PERMETTANT D'ASSURER LA CONTINUITÉ DES SERVICES DE MULTIDIFFUSION ET DE RADIODIFFUSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.11.2020 US 202063113306 P**

(43) Date of publication of application:
**20.09.2023 Bulletin 2023/38**

(73) Proprietor: **Telefonaktiebolaget LM Ericsson (publ)**
**164 83 Stockholm (SE)**

(72) Inventors:
- **PHAM VAN, Dung**
 **194 60 Upplands Väsby (SE)**
- **VESELY, Alexander**
 **8330 Feldbach (AT)**
- **STARE, Erik**
 **192 76 SOLLENTUNA (SE)**
- **SCHLIWA-BERTLING, Paul**
 **585 71 LJUNGSBRO (SE)**
- **ENBUSKE, Henrik**
 **113 41 STOCKHOLM (SE)**
- **HUSCHKE, Jörg**
 **50858 KÖLN (DE)**

- **ÅKESSON, Joakim**
 **438 32 Landvetter (SE)**

(74) Representative: **Ericsson**
**Patent Development**
**Torshamnsgatan 21-23**
**164 80 Stockholm (SE)**

(56) References cited:
**WO-A1-2019/161927** **WO-A1-2020/060224**
**US-A1- 2020 187 232**

- **CATT: "MBS reception of Idle and In-active UEs", vol. RAN WG3, no. electronic; 20201102 - 20201112, 23 October 2020 (2020-10-23), XP051945795, Retrieved from the Internet <URL:https://ftp.3gpp.org/tsg_ran/WG3_Iu/TSG R3_110-e/Docs/R3-206309.zip> [retrieved on 20201023]**
- **MEDIATEK INC: "Scenarios and Requirements for Mobility with Service Continuity", vol. RAN WG2, no. electronic; 20200817 - 20200828, 7 August 2020 (2020-08-07), XP051911727, Retrieved from the Internet <URL:https://ftp.3gpp.org/tsg_ran/WG2_RL2/TS GR2_111-e/Docs/R2-2006827.zip R2-2006827.docx> [retrieved on 20200807]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

- QUALCOMM INC: "NR Multicast dynamic PTM PTP switch with service continuity", vol. RAN WG2, no. E-Meeting; 20200817 - 20200828, 7 August 2020 (2020-08-07), XP051911701, Retrieved from the Internet <URL:https://ftp.3gpp.org/tsg_ran/WG2_RL2/TSGR2_111-e/Docs/R2-2006794.zip R2-2006794_Dynamic PTM PTP switch with service continuity_v1.doc> [retrieved on 20200807]
- OPPO: "Discussion on mobility with MBS Service continuity", vol. RAN WG2, no. electronic; 20201102 - 20201113, 23 October 2020 (2020-10-23), XP051941947, Retrieved from the Internet <URL:https://ftp.3gpp.org/tsg_ran/WG2_RL2/TSGR2_112-e/Docs/R2-2008868.zip R2-2008868-Discussion on mobility with MBS Service continuity.doc> [retrieved on 20201023]
- CATT: "Consideration on Idle and Inactive mode UEs", vol. RAN WG2, no. Electronic meeting ;20200817 - 20200828, 7 August 2020 (2020-08-07), XP051911532, Retrieved from the Internet <URL:https://ftp.3gpp.org/tsg_ran/WG2_RL2/TSGR2_111-e/Docs/R2-2006597.zip R2-2006597 Consideration on Idle and Inactive mode UEs.docx> [retrieved on 20200807]

**Description**

TECHNICAL FIELD

The present application generally relates to wireless communication technology. More particularly, the present application relates to a method and apparatus for providing service continuity for Multicast and Broadcast Service (MBS). The present application also relates to computer program product adapted for the same purpose.

BACKGROUND

In current New Radio (NR) standards, there is no broadcast/multicast feature support specified and thus no mobility support.

Service continuity in mobility is desired in many applications, not only for RRC_CONNECTED MBS User Equipments (UEs) but also for RRC_INACTIVE UEs, especially for those where UEs are originally scheduled to receive multicast services in RRC_CONNECTED but are temporarily moved to RRC_INACTIVE/RRC_IDLE state during a multicast session, e.g., due to high network load situation.

"US 2020/187232 A1 discloses a method in which first multicast/broadcast traffic data is received, buffered and transmitted via a first downlink channel; a retransmission request is received via an uplink channel; second multicast/broadcast traffic data is determined in dependence on the buffered first multicast data and in dependence on the received retransmission request; and the second multicast/broadcast traffic data is transmitted via a second downlink channel.

WO 2019/161927 A1 discloses a method that includes, inter alia, receiving multicast data via a unicast data radio bearer or a multicast data radio bearer; receiving, by a user device located in a first cell, from the base station, a connection suspend message; entering, by the user device, a low activity state in response to the connection suspend message; and, receiving, by the user device, the multicast data via the multicast data radio bearer."

SUMMARY

It is therefore desirable to enable UEs to be able to continue receiving the same MBS services at a new cell/node with minimal or no data loss and without large interruption time incurred by the mobility. This present disclosure describes efficient solutions to handle MBS data loss for mobility of MBS UEs in RRC_INACTIVE state.

In the present disclosure, the solutions for mobility support, i.e., to enable UEs to continue receiving the same MBS service in a new gNB with minimal data loss are proposed.

According to the present disclosure, the solution as disclosed herein enables RRC_INACTIVE UEs to continue reception of MBS service(s) with reduced/minimal data loss when/while moving to a new Radio Access Network (RAN) node with minimal service interruption taken into consideration.

According to one aspect of the disclosure, it enables an RRC_INACTIVE UE to report data loss to a network when the data loss is detected for an MBS service with minimal/zero data loss being required. The current serving network node then either moves the UE to RRC_CONNECTED for handling data loss by itself or communicates with last serving network node to cooperatively handle data loss.

According to another aspect of the disclosure, it enable efficient communication between source and target network nodes involved in mobility of an RRC_INACTIVE UE with reduced/minimal signaling overhead in support of avoiding/minimizing MBS data loss incurred by the mobility.

The scope of protection for the invention is defined by the appended claims. The below embodiments, examples and aspects are present for aiding in understanding the background and advantages of the invention.

BRIEF DESCRIPTION OF THE DRAWINGS

The foregoing and other objects, features, and advantages would be apparent from the following more particular description of preferred embodiments as illustrated in the accompanying drawings in which:

Fig. 1 schematically illustrates an example of signaling flow for PTM-PTM mobility for RRC_INACTIVE UE.
Fig. 2 schematically illustrates an example of signaling flow for PTM-PTP mobility for RRC_INACTIVE UE.
Fig. 3 schematically illustrates a flowchart of the method for providing service continuity for Multicast and Broadcast Service (MBS) according to one embodiment of the present invention.
Fig. 4 is a block diagram illustrating a UE according to another embodiment.
Fig. 5 schematically illustrates a flowchart of the method for providing service continuity for Multicast and Broadcast Service (MBS) according to one embodiment of the present invention.

Fig. 6 schematically illustrates a flowchart of the method for providing service continuity for Multicast and Broadcast Service (MBS) according to one embodiment of the present invention.

Fig. 7 schematically illustrates a flowchart of the method for providing service continuity for Multicast and Broadcast Service (MBS) according to one embodiment of the present invention.

Fig. 8 schematically illustrates a flowchart of the method for providing service continuity for Multicast and Broadcast Service (MBS) according to one embodiment of the present invention.

Fig. 9 schematically illustrates a flowchart of the method for providing service continuity for Multicast and Broadcast Service (MBS) according to one embodiment of the present invention.

Fig. 10 is a block diagram illustrating a RAN node according to another embodiment.

Fig. 11 is a block diagram of a UE according to another embodiment.

Fig. 12 is a block diagram illustrating a RAN node according to another embodiment.

Fig. 13 is a block diagram illustrating a RAN node according to another embodiment.

Fig. 14 is a block diagram illustrating a RAN node according to another embodiment.

Fig. 15 is a block diagram illustrating a RAN node according to another embodiment.

Fig. 16 is a block diagram illustrating a RAN node according to another embodiment.

## DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term "processor" refers to one or more devices, circuits, and/or processing cores configured to process data, such as computer program instructions. The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Also, use of ordinal terms such as "first," "second," "third," etc., in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements.

Unless otherwise defined, all terms (including technical and scientific terms) used herein have the same meaning as commonly understood. It will be further understood that terms used herein should be interpreted as having a meaning that is consistent with their meaning in the context of this specification and the relevant art and will not be interpreted in an idealized or overly formal sense unless expressly so defined herein.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

## NR_MBS work item objectives

There was no broadcast/multicast feature support is specified in the first two NR releases, i.e. Rel-15 and Rel-16. 3GPP has defined a new work item (WI) on NR support of multicast and broadcast services (NR_MBS).

Specify RAN basic functions for broadcast/multicast for UEs in RRC_CONNECTED state [RAN1, RAN2, RAN3]:

  ◦ Specify a group scheduling mechanism to allow UEs to receive Broadcast/Multicast service [RAN1, RAN2]

♦ This objective includes specifying necessary enhancements that are required to enable simultaneous operation with unicast reception.

◦ Specify support for dynamic change of Broadcast/Multicast service delivery between multicast (Point-to-Multipoint, PTM) and unicast (Point-to-Point, PTP) with service continuity for a given UE [RAN2, RAN3]
◦ Specify support for basic mobility with service continuity [RAN2, RAN3]
◦ Assuming that the necessary coordination function (like functions hosted by MCE, if any) resides in the gNB-CU, specify required changes on the RAN architecture and interfaces, considering the results of the SA2 SI on Broadcast/Multicast (SP-190625) [RAN3]
◦ Specify required changes to improve reliability of Broadcast/Multicast service, e.g. by UL feedback. The level of reliability should be based on the requirements of the application/service provided.[RAN1, RAN2]
◦ Study the support for dynamic control of the Broadcast/Multicast transmission area within one gNB-DU and specify what is needed to enable it, if anything [RAN2, RAN3]

Specify RAN basic functions for broadcast/multicast for UEs in RRC_IDLE/ RRC_INACTIVE states [RAN2, RAN1]:

◦ Specify required changes to enable the reception of Point to Multipoint transmissions by UEs in RRC_IDLE/ RRC_INACTIVE states, with the aim of keeping maximum commonality between RRC_CONNECTED state and RRC_IDLE/RRC_INACTIVE state for the configuration of PTM reception. [RAN2, RAN1].

Note the possibility of receiving Point to Multipoint transmissions by UEs in RRC_IDLE/ RRC_INACTIVE states, without the need for those UEs to get the configuration of the PTM bearer carrying the Broadcast/Multicast service while in RRC_CONNECTED state beforehand, is subject to verification of service subscription and authorization assumptions during the WI.

Among the objectives, it is required to specify changes to enable the reception of multicast services by UEs in RRC_IDLE/ RRC_INACTIVE states, with the aim of keeping maximum commonality between RRC_CONNECTED state and RRC_IDLE/RRC_INACTIVE state for the configuration of PTM reception. Another objective is to specify support for basic mobility with service continuity, primarily defined for RRC_CONNECTED.

**3GPP Progress**

In RAN, the topic of MBS reception by UEs in RRC_IDLE/INACTIVE was first discussed in RAN2#111-e but no agreements were reached. The companies then progress with an email discussion after the meeting:

◦ [Post111-e][906][MBS] Idle mode support (CATT)

♦ Scope: MBS support in Idle Inactive modes. Focus on Control Plane aspects. Collect and describe understanding of the consequences of the main solutions on the table: A) reuse Conn Mode solution vs B) reuse EUTRA solution. At limited level of detail, Identify further main sub-options if any (e.g. low high ambition level).
♦ Intended outcome: Report

In one of the potential solutions being discussed for multicast reception in RRC_IDLE/INACTIVE, MBS/PTM configuration acquired while UE is in RRC_CONNECTED can be (re)used for reception of multicast services by UE in RRC_IDLE/INACTIVE. This includes also the scenario where network congestion occurs due to large number of multicast UEs in RRC_CONNECTED leading to the need for network to schedule a number of UEs to transit to temporally stay in RRC_IDLE/INACTIVE for multicast reception.

**Handling data loss in mobility for legacy unicast**

In legacy unicast, for mobility in RRC_CONNECTED, i.e., handover, for radio bearers with Radio Link Control (RLC) Acknowledged Mode (AM) mode, Packet Data Convergence Protocol (PDCP) sublayer can either be re-established or initiate a data recovery procedure. Whereas, for radio bearers with RLC Unacknowledged Mode (UM) mode, PDCP can be re-established. For AM radio bearers, PDCP re-establishment and PDCP data recovery both trigger PDCP status report and retransmission of unsuccessfully delivered PDCP PDUs. But in case of UM radio bearers, there is no PDCP status reporting and the PDCP re-establishment only allows for transmission of PDCP Service Data Units (SDUs) which are already assigned PDCP sequence number (SN) but have not been submitted to lower layers.

In the PDCP status reporting for Downlink (DL) transmission, the UE sends a PDCP Ctrl PDU containing the report that includes the first missing COUNT (FMC) as the 32-bit COUNT value of the first missing PDCP SDUs within the reordering window, i.e., RX_DELIV (TS38.323). The status report can optionally include a bitmap with variable length to indicate which PDCP SDUs are missing and which SDUs are correctly received.

To minimize data loss during mobility, it is assumed that the stream of PDCP packets of MBS data and corresponding sequence numbering are the same at both the source and target nodes.

In one embodiment of the invention, when the lossless is required for an MBS service for a particular UE, the UE is prioritized to be kept in RRC_CONNECTED for receiving the MBS service. That is, in case network needs to schedule one or more UEs in the multicast group to transit from RRC_CONNECTED to RRC_INACTIVE/IDLE, the UE with lossless requirement will be the last to be forced to leave RRC_CONNECTED.

In one embodiment, UE locally maintains PDCP sequence number (SN)/COUNT of the received PDCP PDUs of MBS data while in RRC_INACTIVE. This is to allow the UE to inform network, if needed, when it detects missing data packets of an MBS session that has a requirement on minimal/no data loss. Such a requirement on data loss may be signaled to UE when it subscribes to the MBS service or joins the session, i.e., while in RRC_CONNECTED state.

**Missing data packets triggered by UE**

In one embodiment, when an RRC_INACTIVE UE resumes to a new or target cell/gNB, i.e., different from the source node where its Radio Resource Control (RRC) connection was suspended, it indicates to the new cell/gNB the sequence number (SN) or part of SN of a PDCP PDU as the first expected SN or first expected COUNT (FEC) for (re)retransmission by the new cell/gNB. Note that FEC may correspond to a PDCP PDU whose SN is smaller than or equal to the last received PDCP PDU. In addition, in case of no missing PDU identified by the UE, FEC can be set to the SN of the last received PDCP PDU + 1. With this indication, the target node knows that at least those missing PDCP PDUs need to be delivered to the UE.

Given that the grant size for Msg3 with RRCResumeRequest(1) may not be sufficient to include the whole SN/COUNT, which can be up to 18/32 bits long according to current PDCP specifications, several solutions are proposed for using the amount of X available bits in Msg3 for indicating PDUs to be retransmitted:

   ∘ the UE can include only X least significant bits of the SN/COUNT as the FEC in Msg3. For example, when X is equal to 3 bits, the network can handle the recovery of up to 8 recently missed PDUs at UE.

      ♦ To indicate the value of X, the network can broadcast this value via system information. Alternatively, this value can be included as part of common MBS configuration information signaled to UEs, i.e. either via dedicated signaling or common signaling.
      ♦ UE and network need to agree on where to encode the X bits. One option is to use the padding bits in Msg3, if available. Another option is to define a new field in the RRCResumeRequest(1) message.
      ♦ There needs a possibility to indicate that there is no missing PDCP PDUs to be delivered again. For example, this can be indicated by another 1-bit field in Msg3. Or A special value of FEC/SN in Msg3 can be defined for this.

   ∘ The UE reports only an index into the range of most recently received SN/COUNT. This is a generalization of the above method. In both methods the network and the UE need to have a common understanding of the range. In the above method, the network and the UE need to have a common understanding of the SN/COUNT most significant bits that the UE does not address in Msg3. The range addressable by the UE therefore has to be large enough to ensure that the UE has not lost more PDUs than that belong to the range.
   ∘ If e.g. the extended method should allow the recovery of up to $2^Z$ lost PDUs but there are only X bits in Msg3, then each of the $2^X$ values Y can represent one of the $2^Z$ PDUs, e.g. in a linear fashion:

$$\text{PDU number in the range} = 2^Z/2^X * Y$$

In another embodiment, when an RRC_INACTIVE UE detects missing data packets of an MBS session, instead of selecting a new cell, it performs resume procedure at current servicing node to request for data loss handling by the current node.

   ∘ Similar to the previous case (resume to a new node), the UE needs to indicate to the source gNB that some PDCP PDUs are missing. This indication can be in form of a field in RRCResumeRequest(1) in Msg3 or in RRCResumeComplete in Msg5. In case of indication in Msg3, the UE can include only X least significant bits of the PDCP COUNT as the FEC.

In another embodiment, when an RRC_INACTIVE UE resumes to a new or target cell/gNB, i.e., different from the source node where its RRC connection was suspended, it performs random access procedure to enter RRC_CONNECTED. The UE then sends an PDCP status report indicating the status of missing PDCP PDUs from source cell/gNB without being triggered by the target cell/gNB.

◦ Without a trigger from target, to make network understand the PDCP control PDU, the UE can indicate to the target in Msg3 or Msg5 of the random access procedure that it wants to be able to send a PDCP status report, for example, by being configured with AM RLC Multicast Radio Bearer (MRB). This indication can be done via an unused bit in Msg3/Msg5, such as a reserved bit in RRCResumeRequest(1). As another example, an 1-bit flag/field in Msg3 Medium Access Control (MAC) PDU or within the RRCResumeRequest(1) can be defined for this purpose.
◦ In the UE, an additional triggering condition for PDCP status report can be specified based on the detection of missing data packets from previous cell/gNB. This trigger can be applicable to only AM MRB or both AM and UM MRB radio bearers.
◦ The target once received the status report from UE, shall retransmit missing PDCP PDUs depending on the case, as described below.

**Possible changes at target node for handling data loss**

In one embodiment, the target node once is has received the indication from the UE (or from the source) learns that it is expected to start either delivering missing PDCP PDUs or delivering new MBS data to the UE. However, the expected MBS data might not be available at the target node due to either no ongoing MBS session at the target or the missing MBS data is not (or no longer) available in its local buffer. Thus, the target node may behave differently depending on the case.

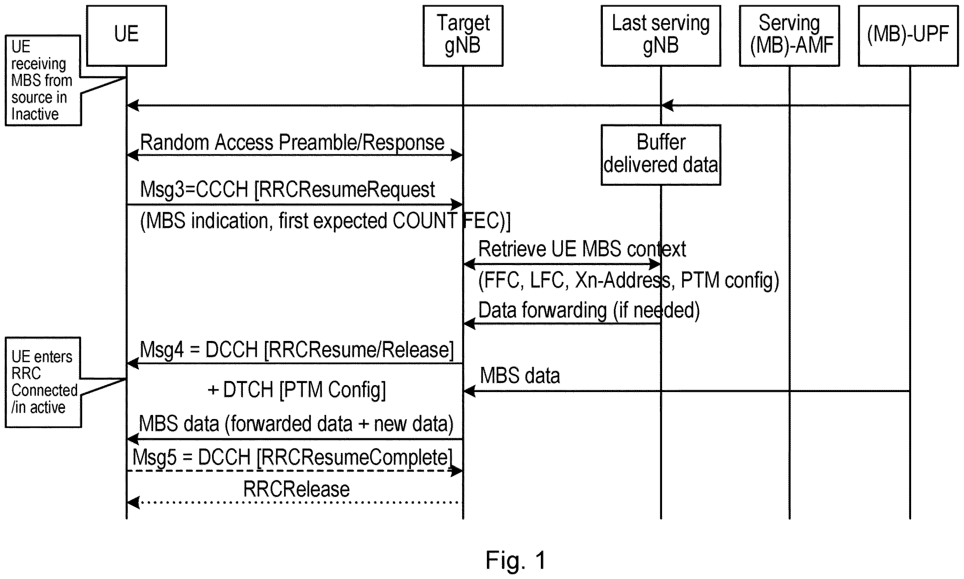

◦ Case 1: In case the FEC indicated by the UE is greater than the value corresponding to respective X least significant bits of the current PDCP COUNT of the same MBS data stream, i.e., target node is ahead in delivering MBS data compared to source node, the target only needs to locally restore/retransmit all the PDCP PDUs in the gap between current COUNT and FEC to the UE. Those missing PDUs may or may not be available in the local buffer of the target node. Therefore, to avoid the need to fetch data again, the RAN node can keep a number of already delivered PDCP PDUs in local buffer. Figure 1 shows an example of signaling flow for this case.

   ♦ Even with local buffering of delivered data, some or all the requested PDCP PDUs may be unavailable at the target. In this case, the target can request the retransmission of corresponding MBS packets from (MB)-User Plane Function (UPF) or other nodes in the same service area including source node.

      ▪ Fetching data from source can be triggered by the target indicating the smallest PDCP COUNT to be forwarded from source, i.e., first forwarded COUNT (FFC). In addition, either the number of PDCP PDUs or the largest PDCP COUNT, i.e., last forwarded COUNT (LFC) should also be indicated. Alternatively, data forwarding keeps taking place until further notification from the target. To facilitate the data forwarding, as in legacy unicast, the Xn-Address can be included in the same retrieve UE MBS context procedure. The same applies to the MBS configuration at target cell/gNB.
      ▪ The Xn-AP retrieve UE MBS context procedure can be extended for the target to cover such indication(s).

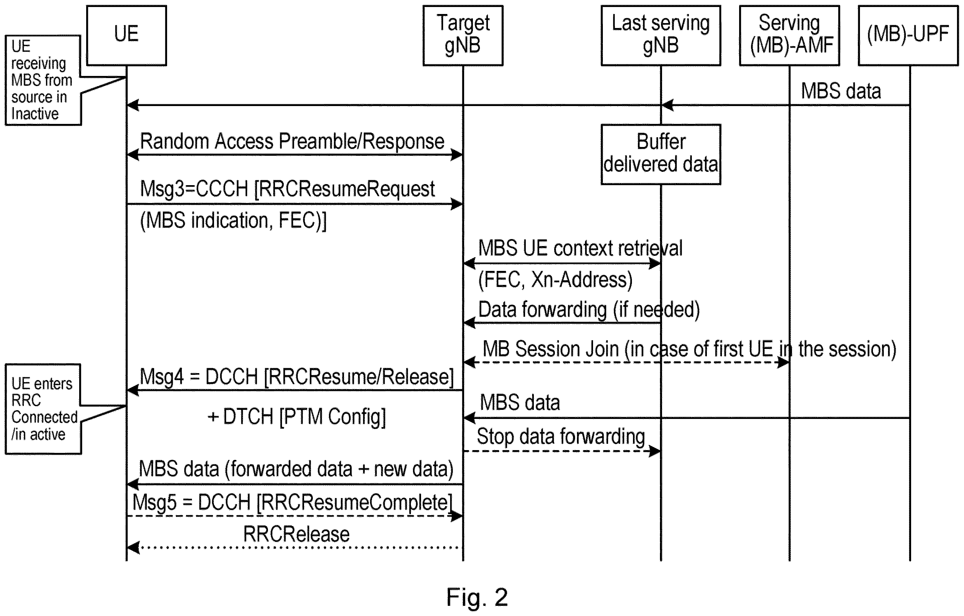

◦ Case 2: In case the FEC indicated by the UE is smaller than the value corresponding to respective X least significant bits of the current PDCP COUNT of the same MBS data stream, i.e., source node is ahead in delivering MBS data compared to target node, the target can choose to skip one or several packets by starting to deliver PDCP PDU corresponding to FEC to the UE. In this case, there is no need for data forwarding from source. Hence, the target can inform the source by an indication in the retrieve UE MBS context procedure. This indication can be in form of a special predefined value of the smallest expected PDCP COUNT (described earlier), e.g., where all bits are set to 1. Alternatively, an additional 1-bit flag in the context retrieve request can be defined.
◦ Case 3: In case the target supports MBS feature but there is no current COUNT for the MBS data stream, i.e., no ongoing MBS session at target node, the target can indicate this to the source so that data forwarding can take place until the target receives data from core i.e., (MB)-UPF and determines that it has all MBS data to maintain service continuity. In this context, service continuity means no gap between the first packet received from the core and the data forwarded from the source. Figure 2 shows an example of signaling flow for this case.

   ♦ The indication to the source is in the retrieve UE MBS context request and can include the FEC requested by the UE and an additional 1-bit flag, i.e., to indicate MBS session is not available (NA indication). Alternative to the 1-bit flag, the absence of MBS/PTM configuration in the retrieve UE MBS context can be an implicit indication (see also Fig. 2).

- In this case, the target once established the session and received data from the core, it indicates to the source for stopping the data forwarding. This can be done by extending an existing Xn-AP procedure, e.g., Xn-AP UE context release or defining a new Xn-AP procedure for this purpose.

  ◦ Case 4: In case the target does not support MBS feature, the target can indicate this to the source node as well as coordinating with the core for establishing a PDU session to deliver MBS data with the individual delivery method instead. The indication to the source node can be done by target sending the UE context release message with the FEC requested by the UE. Once received such a context release request, the source forwards all related MBS data to the target and releases the UE MBS context. Note that there is no context retrieval in this case. The handling of data forwarded from the source and newly arrived data through PDU session is outside the scope of this invention.

In another embodiment, when the data forwarding from source node is needed, the target node keeps the UE in RRC_CONNECTED after the resume procedure and configures AM RLC mode for the MBS radio bearer for improved reliability and service continuity.

**Possible changes at source node for handling data loss**

In one embodiment, in response to the MBS context request from the target, the source cell/gNB shall check if there is any MBS-related indication/parameter and behave accordingly:

  ◦ In case there is no such a need to forward any missing PDCP PDUs (case 2 above), i.e., no FFC or FEC, the source does not even forward any pending PDCP PDUs which have been constructed but have not been yet delivered to RLC sublayer. This is because the target should be able to locally construct and deliver the same data packets to the UE.
  ◦ In case there is FEC or FFC indicated by the target, the source forwards those missing PDCP PDUs that may include constructed but not yet delivered PDCP PDUs.

    ♦ If the requested PDCP PDUs are no longer available at the source, the source can request the retransmission of corresponding MBS packets from (MB)-UPF or other NG-RAN nodes in the same service area.

In another embodiment, if the RRC_INACTIVE UE performs random access and indicates FEC to the source:

  ◦ The source can move the UE to RRC_CONNECTED for retransmission of missing PDUs.

    ♦ Depending on expected level of reliability, the gNB can configure respective MBS radio bearer with either AM or UM RLC mode for the UE while in RRC_CONNECTED and delivers again the missing PDUs.
    ♦ After successful delivery of the missing data packets, the current gNB can release the UE to RRC_INACTIVE. The UE can select another cell/gNB and continue MBS reception with the new cell/gNB either in RRC_CONNECTED or RRC_INACTIVE.

      ▪ Alternatively, the UE can indicate that it intends to move to a specific cell/gNB so that the current serving gNB can redirect the UE by performing handover procedure. Such an indication can be either in Msg3, in Msg5 during the random access or in another message while in RRC_CONNECTED (e.g., measurement procedure).

  ◦ Alternative to retransmission of missing PDCP PDUs at the source, the source can store the FEC in the UE context and provide to the target during either during the context retrieve procedure (when UE is resuming to target) or during handover preparation phase when UE is in RRC_CONNECTED. In this case, target shall handle the missing PDUs as described above.

In another embodiment, when the source cell/gNB releases a UE to RRC_INACTIVE, the source informs potential target cells/gNBs of the UE's reception status of the MBS session. This is to enable potential target cells/gNBs to be prepared for the case the UE moves to their area and requests for retransmission. Such a preparation in advance can help get rid of data forwarding between source and target. Example of potential target nodes can be similar to nodes in RAN notification area (RNA), e.g., neighboring nodes. The communication between source and potential target nodes can be in form of pre-population of UE MBS context, i.e., the source sends UE MBS context to potential targets after/during the connection release. In this case, PDCP COUNT/SN of the last PDCP PDU can be included in the UE MBS context so that the target knows which PDUs should not be discarded in case retransmission is needed. If the target does not have the MBS session ongoing, it can establish the session in advance and get MBS data packet from core starting from the indicated COUNT/SN.

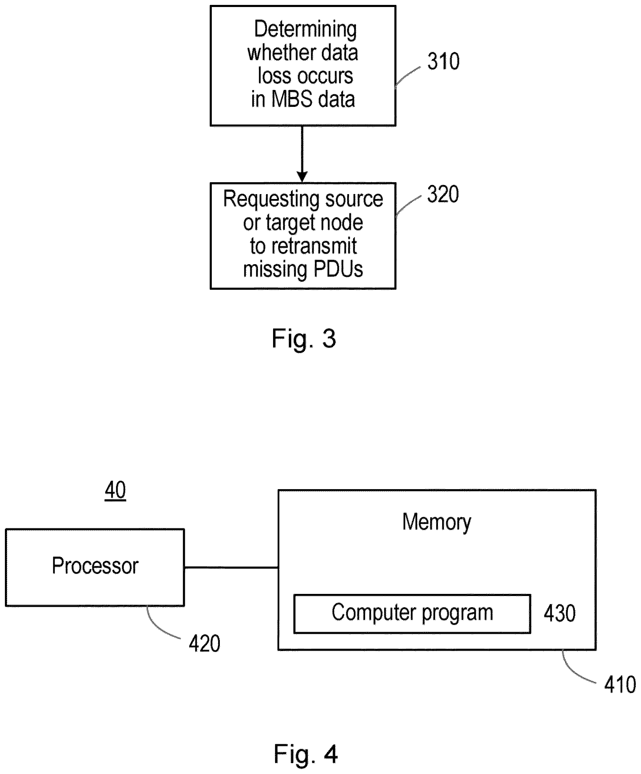

A flowchart of a method 300 for providing service continuity for Multicast and Broadcast Service (MBS) according to one embodiment of the present invention is shown in Figure 3. Figure 3 is described with reference to a "first node" and a "second node". In certain embodiments, the first node is a first radio access network (RAN) node. In certain embodiments, the second node is a second RAN node.

The flowchart as shown in Fig. 3 comprises the following steps performed, e.g., at UE side:

Step 310: A UE determines whether data loss occurs in MBS data previously transmitted to the UE from a first node (e.g. a source node); and
Step 320: if the data loss occurs, the UE requests a first or second Radio Access Network (RAN) node to retransmit one or more missing Packet Data Units (PDUs) in the MBS data. The first node is one that previously transmitted the MBS data to the UE (i.e. a source node), and the second node is one that the UE will resume to (i.e. a target node), or one that the UE might resume to (in case the UE resumes to the source node instead of the target node).

In this embodiment, preferably, at the step of requesting, the UE sets a first expected count (FEC) based on a sequence number corresponding to a PDCP PDU last received from the first node. Afterwards, when the UE resumes to the first or second node, it sends the FEC to the first or second node.

In this embodiment, preferably, the FEC is set based on the whole of the sequence number.

In this embodiment, preferably, the FEC is set based on X least significant bits of the sequence number, and the value of X is notified to the UE by broadcasting via system information or by common MBS configuration information signaled to the UE.

In this embodiment, preferably, the FEC is included in RRCResumeRequest or RRCResumeRequest(1) sent to the first or second node.

In this embodiment, preferably, the FEC is included in RRCResumeComplete sent to the first node.

In this embodiment, preferably, the FEC is set to be equal to the sequence number plus 1 if no data loss occurs.

In this embodiment, preferably, at the step of requesting, when the UE resumes to the second node, it sends to the second node a PDCP status report indicating the missing PDUs.

In this embodiment, the step of requesting can further comprise indicating, to the second node, in a random access procedure that a PDCP status report is to be sent by the UE.

In this embodiment, the step of indicating can comprise indicating to the second node in a Msg3 or Msg5 message of the random access procedure.

Fig. 4 is a block diagram illustrating a UE according to another embodiment.

With reference to Fig. 4, the UE 40 comprises memory 410 and a processor 420 coupled to the memory 410. The memory 410 is configured to store a computer program 430 comprising computer instructions. The processor 420 is configured to execute the computer instructions to perform some or all of the method steps as shown in Fig 3, including none, any, or all of the above-described optional and/or preferred features associated with that method. More generally, the UE 40 can be configured to perform the method steps as shown in Fig. 3, and none, any, or all of the above-described optional and/or preferred features associated with that method.

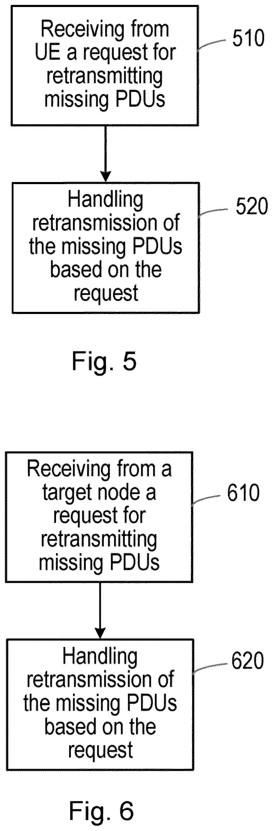

A flowchart of a method 500 for providing service continuity for Multicast and Broadcast Service (MBS) according to another embodiment of the present invention is shown in Figure 5. Figure 5 is described with reference to a "source node" and a "target node". In certain embodiments, the source node is a source radio access network (RAN) node. In certain embodiments, the target node is a target RAN node.

The flowchart as shown in Fig. 5 comprises the following steps performed at RAN side or a RAN node, e.g., a source node (previously serving node) which transmits MBS data associated with a MBS session previously to a UE, or a target node (current serving node) which the UE will resume to.

Step 510: The target node receives from the UE a request for retransmitting one or more missing Packet Data Units (PDUs) in MBS data associated with a MBS session previously transmitted from the source node to the UE.

Step 520: The target node handles retransmission of the missing PDUs based on the request.

In this embodiment, preferably, the step of handling is performed as follows:
Based on a first expected count (FEC) included in the request, the target node determines whether the missing PDUs are available at the target node. The FEC is set based on a sequence number corresponding to a PDCP PDU last received from the source node.

Then, if the missing PDUs are unavailable at the target node, the target node requests the source node to transmit the missing PDUs to the first node. This request can be sent by Retrieve UE MBS context.

An MBS session can be established at the target node for the UE.

Afterwards, the target node continues the MBS session by transmitting to the UE the missing PDUs along with MBS data that the first node receives from an MB-UPF.

In this embodiment, preferably, the FEC is set based on the whole of the sequence number or X least significant bits of the sequence number, and the value of X is notified to the UE by broadcasting via system information or by common MBS configuration information signaled to the UE.

In this embodiment, preferably, the FEC is included in RRCResumeRequest/RRCResumeRequest(1) sent to the target node.

In this embodiment, preferably, the step of handling is performed as follows:

If the target node determines the MBS session is unavailable at the target node, it requests the source node to forward MBS data received from an MB-UPF to the source node until the target node receives MBS data from the MB-UPF.

An MBS session can be established at the target node for the UE.

Then, the target node continues the MBS session by transmitting to the UE the MBS data forwarded by the source node and the MBS data received from the MB-UPF.

In this embodiment, preferably, the flowchart further comprises the following step: The target node informs the source node to stop forwarding the MBS data after receiving the MBS data from the MB-UPF.

In this embodiment, preferably, the step of handling is performed as follows:

If the target node determines the MBS session is not supported by the target node, it requests the source node to release the MBS session and forward MBS data from an MB-UPF to the target node.

Then, the target node coordinates with the MB-UPF to establish a PDU session instead of the MBS session.

A flowchart of a method 600 for providing service continuity for Multicast and Broadcast Service (MBS) according to another embodiment of the present invention is shown in Figure 6. Figure 6 is described with reference to a "source node" and a "target node". In certain embodiments, the source node is a source radio access network (RAN) node. In certain embodiments, the target node is a target RAN node.

The flowchart as shown in Fig. 6 comprises the following steps performed at RAN side or a RAN node, e.g., a source node (previously serving node) which transmits MBS data associated with a MBS session previously to a UE.

Step 610: The source node receives from a target node that the UE will resume to, a request for retransmitting one or more missing Packet Data Units (PDUs) in MBS data previously transmitted from the source node to the UE.

Step 620: The source node handles retransmission of the missing PDUs based on the request.

In this embodiment, preferably, the step of handling is performed as follows:

Based on a first expected count (FEC) included in the request, the source node determines whether the missing PDUs are available at the source node. The FEC was set based on a sequence number corresponding to a PDCP PDU last received from the source node at the UE.

Then, if unavailable, the source node requests an MB-UPF or other nodes belonging to the same service area as the source node to transmit the missing PDUs to the target node.

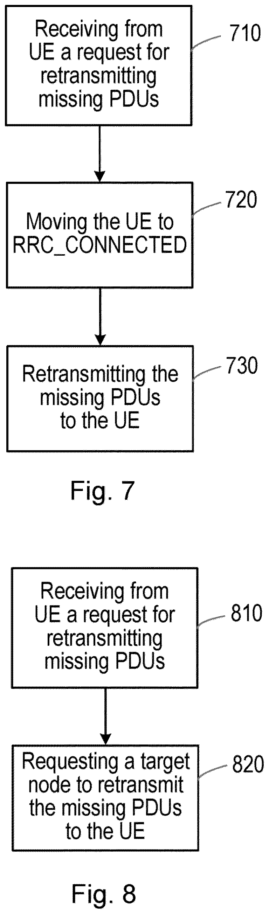

A flowchart of a method 700 for providing service continuity for Multicast and Broadcast Service (MBS) according to another embodiment of the present invention is shown in Figure 7. Figure 7 is described with reference to a "source node" and a "target node". In certain embodiments, the source node is a source radio access network (RAN) node. In certain embodiments, the target node is a target RAN node.

The flowchart as shown in Fig. 7 comprises the following steps performed at RAN side or a RAN node, e.g., a source node (previously serving node) which transmits MBS data associated with a MBS session previously to a UE.

Step 710: The source node receives, from the UE a request for retransmitting one or more missing Packet Data Units (PDUs) in MBS data previously transmitted from the source node to the UE.

Step 720: The source node moves the UE to RRC_CONNECTED.

Step 730: The source node retransmits the missing PDUs to the UE.

In this embodiment, preferably, the retransmitting is carried out by configuring MBS radio bearers with either Acknowledged Mode (AM) or Unacknowledged Mode (UM) Radio Link Control (RLC) mode based on expected level of reliability.

In this embodiment, preferably, the flowchart further comprises the following step: the source node redirects the UE to a target node by performing handover procedure.

A flowchart of a method 800 for providing service continuity for Multicast and Broadcast Service (MBS) according to another embodiment of the present invention is shown in Figure 8. Figure 8 is described with reference to a "source node" and a "target node". In certain embodiments, the source node is a source radio access network (RAN) node. In certain embodiments, the target node is a target RAN node.

The flowchart as shown in Fig. 8 comprises the following steps performed at RAN side or a RAN node, e.g., a source node (previously serving node) which transmits MBS data associated with a MBS session previously to a UE.

Step 810: The source node receives, from a UE a request for retransmitting one or more missing Packet Data Units (PDUs) in MBS data previously transmitted from the source node to the UE.

Step 820: The source node requests, either during a context retrieve procedure or during a handover preparation phase, a target node, which the UE will resume to, to retransmit the missing PDUs to the UE.

In this embodiment, preferably, the requesting is carried out by sending a first expected count (FEC) from the source node to the target node, the FEC is set based on a sequence number corresponding to a PDCP PDU last received from the source node.

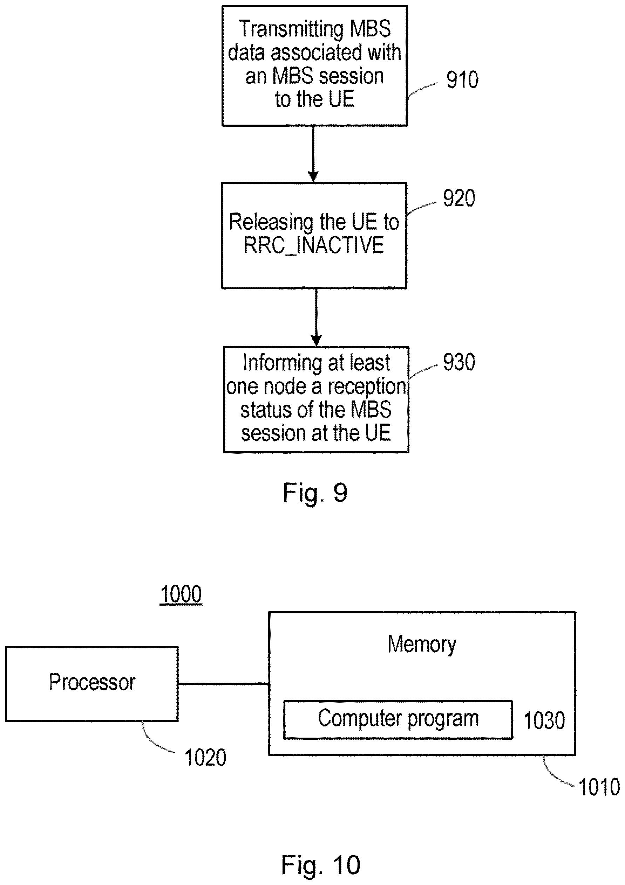

A flowchart of a method 900 for providing service continuity for Multicast and Broadcast Service (MBS) according to another embodiment of the present invention is shown in Figure 9. Figure 9 is described with reference to a "source node" and a "target node". In certain embodiments, the source node is a source radio access network (RAN) node. In certain embodiments, the target node is a target RAN node.

The flowchart as shown in Fig. 9 comprises the following steps performed at RAN side or a RAN node, e.g., a source node (previously serving node) which transmits MBS data associated with a MBS session previously to a UE.

Step 910: The source node transmits MBS data associated with an MBS session to the UE.

Step 920: The source node releases the UE to RRC_INACTIVE.

Step 930: The source node informs at least one node, which the UE possibly resumes to, of a reception status of the MBS session at the UE.

In this embodiment, preferably, the at least node has the same RAN notification area (RNA) as the source node.

In this embodiment, preferably, the informing is carried out by sending a UE MBS context to the at least node after or during the releasing of the UE, and the UE MBS context includes a sequence number corresponding to a PDCP PDU last received from the source node.

Fig. 10 is a block diagram illustrating a RAN node according to another embodiment.

With reference to Fig. 10, the RAN node 1000 comprises memory 1010 and a processor 1020 coupled to the memory 1010. The memory 1010 is configured to store a computer program 1030 comprising computer instructions. The processor 1020 is configured to execute the computer instructions to perform some or all of the method steps as shown in Figs. 5-9, including none, any, or all of the above-described optional and/or preferred features associated with that method. More generally, the UE 40 can be configured to perform the method steps as shown in any of Figs. 5-9, and none, any, or all of the above-described optional and preferred features associated with those methods.

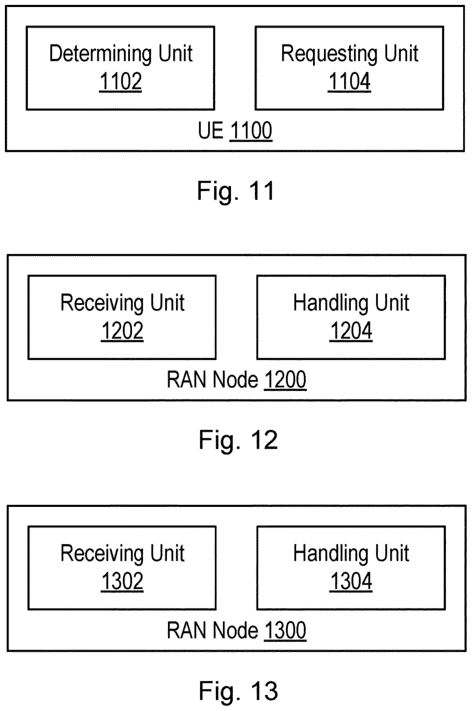

Fig. 11 is a block diagram illustrating a UE 1100 according to another embodiment. Fig. 11 illustrates functional modules or units in a UE which may execute examples of the method in Fig. 3, for example according to computer readable instructions received from a computer program. It will be understood that the modules or units illustrated in Fig. 11 are functional units, and may be realized in hardware, software, or any appropriate combination of hardware and/or software. The units may comprise one or more processors and may be integrated to any degree.

The UE 1100 comprises a determining unit 1102 that is configured to determine whether data loss occurs in MBS data previously transmitted to the UE from a fist RAN node

The UE 1100 also comprises a requesting unit 1104 that is configured to request the first RAN node or a second RAN node to retransmit one or more missing PDUs from the MBS data if the data loss occurs. The first RAN node is one that previously transmitted the MBS data to the UE, and the second RAN node is one that the UE is able to resume to.

Fig. 12 is a block diagram illustrating a first RAN node 1200 according to another embodiment. Fig. 12 illustrates functional modules or units in an example of a first RAN node 1200 which may execute examples of the method in Fig. 5, for example according to computer readable instructions received from a computer program. It will be understood that the modules or units illustrated in Fig. 12 are functional units, and may be realized in hardware, software, or any appropriate combination of hardware and/or software. The units may comprise one or more processors and may be integrated to any degree.

The RAN node 1200 comprises a receiving unit configured to receive from a UE a request for retransmitting one or more missing PDUs in MBS data associated with an MBS session previously transmitted from a second RAN node to the UE.

The RAN node 1200 also comprises a handling unit configured to handle retransmission of the missing PDUs based on the request.

Fig. 13 is a block diagram illustrating a first RAN node 1300 according to another embodiment. Fig. 13 illustrates functional modules or units in an example of a first RAN node 1300 which may execute examples of the method in Fig. 6, for example according to computer readable instructions received from a computer program. It will be understood that the modules or units illustrated in Fig. 13 are functional units, and may be realized in hardware, software, or any appropriate combination of hardware and/or software. The units may comprise one or more processors and may be integrated to any degree.

The RAN node 1300 comprises a a receiving unit configured to receive, from a second RAN node that a UE will resume to, a request for retransmitting one or more missing PDUs in MBS data previously transmitted from the first RAN node to the UE.

The RAN nodes 1300 also comprises a handling unit configured to handle retransmission of the missing PDUs based on the request.

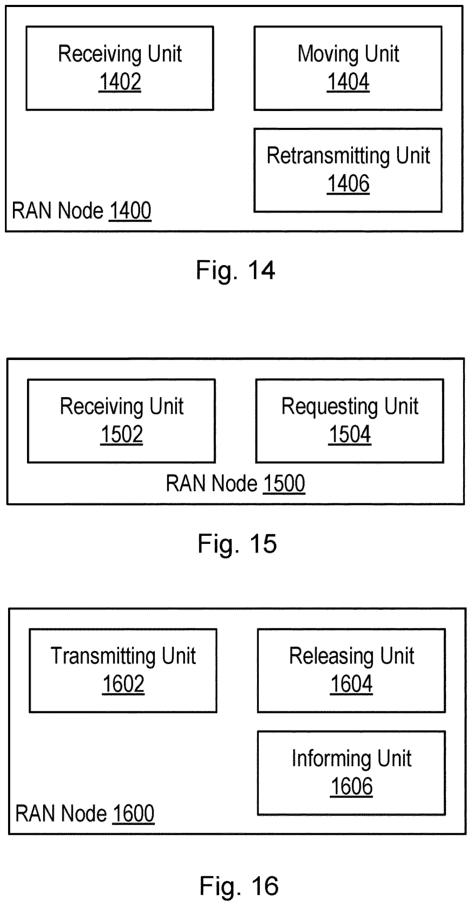

Fig. 14 is a block diagram illustrating a first RAN node 1400 according to another embodiment. Fig. 14 illustrates functional modules or units in an example of a first RAN node 1400 which may execute examples of the method in Fig. 7, for example according to computer readable instructions received from a computer program. It will be understood that the modules or units illustrated in Fig. 14 are functional units, and may be realized in hardware, software, or any appropriate combination of hardware and/or software. The units may comprise one or more processors and may be integrated to any degree.

The first RAN node 1400 comprises a receiving unit configured to receive, from a UE a request for retransmitting one or more missing PDUs in MBS data previously transmitted from the first RAN node to the UE;
The first RAN node 1400 also comprises a moving unit configured to move the UE to RRC_CONNECTED.

The first RAN node 1400 also comprises a retransmitting unit configured to retransmit the missing PDUs to the UE.

Fig. 15 is a block diagram illustrating a first RAN node 1500 according to another embodiment. Fig. 15 illustrates functional modules or units in an example of a first RAN node 1500 which may execute examples of the method in Fig. 8, for example according to computer readable instructions received from a computer program. It will be understood that the modules or units illustrated in Fig. 15 are functional units, and may be realized in hardware, software, or any appropriate combination of hardware and/or software. The units may comprise one or more processors and may be integrated to any degree.

The first RAN node 1500 comprises a receiving unit configured to receive, from a UE a request for retransmitting one or more missing PDUs in MBS data previously transmitted from the first RAN node to the UE.

The first RAN node 1500 also comprises a requesting unit configured to request, either during a context retrieve procedure or during a handover preparation phase, a second RAN node to retransmit the missing PDUs to the UE.

Fig. 16 is a block diagram illustrating a first RAN node 1600 according to another embodiment. Fig. 16 illustrates functional modules or units in an example of a first RAN node 1600 which may execute examples of the method in Fig. 9, for example according to computer readable instructions received from a computer program. It will be understood that the modules or units illustrated in Fig. 16 are functional units, and may be realized in hardware, software, or any appropriate combination of hardware and/or software. The units may comprise one or more processors and may be integrated to any degree.

The first RAN node 1600 comprises a transmitting unit configured to transmit MBS data associated with an MBS session to a UE.

The first RAN node 1600 also comprises a releasing unit configured to release the UE to RRC_INACTIVE.

The first RAN node 1600 also comprises an informing unit configured to inform at least one second RAN node of a reception status of the MBS session at the UE.

It should be noted that the aforesaid embodiments are illustrative instead of restricting, substitute embodiments may be designed by those skilled in the art without departing from the scope of the claims enclosed. The wordings such as "include", "including", "comprise" and "comprising" do not exclude elements or steps which are present but not listed in the description and the claims. It also shall be noted that as used herein and in the appended claims, the singular forms "a", "an", and "the" include plural referents unless the context clearly dictates otherwise. Embodiments can be achieved by means of hardware including several different elements or by means of a suitably programmed computer. In the unit claims that list several means, several ones among these means can be specifically embodied in the same hardware item. The use of such words as first, second, third does not represent any order, which can be simply explained as names.

**Claims**

1. A method for providing service continuity for Multicast and Broadcast Service, MBS, which is carried out by a User Equipment, UE, that is receiving MBS data while in a RRC_INACTIVE state, the method **characterized in** comprising:

   determining (310) whether data loss occurs in MBS data previously transmitted to the UE from a first Radio Access Network, RAN, node; and
   if the data loss occurs, requesting (320), in a request to resume a Radio Resource Control, RRC, connection, the first RAN node or a second RAN node to retransmit one or more missing Packet Data Units, PDUs, from the MBS data, wherein the first RAN node is one that previously transmitted the MBS data to the UE, and the second RAN node is one that the UE is able to resume the RRC connection to.

2. The method according to claim 1, wherein the step of requesting (320) comprises:

setting a first expected count, FEC, based on a sequence number corresponding to a Packet Data Convergence Protocol, PDCP, PDU last received from the first RAN node; and

when the UE resumes to the first or second RAN node, sending the FEC to the first or second RAN node.

3. The method according to claim 2, wherein one of:

(i) the FEC is set based on the whole of the sequence number;
(ii) the FEC is set based on X least significant bits of the sequence number, and the value of X is notified to the UE by broadcasting via system information or by common MBS configuration information signaled to the UE; and
(iii) the FEC is set to be equal to the sequence number plus 1 if no data loss occurs.

4. A method for providing service continuity for Multicast and Broadcast Service, MBS, which is carried out by a first radio access network, RAN, node, the method **characterized in** comprising:

receiving (510) from a User Equipment, UE, in a request to resume a Radio Resource Control, RRC, connection, a request for retransmitting one or more missing Packet Data Units, PDUs, in MBS data associated with an MBS session previously transmitted from a second RAN node to the UE while the UE was in a RRC_INACTIVE state; and
handling (520) retransmission of the missing PDUs based on the request.

5. The method according to claim 4, wherein the first RAN node is one that the UE will resume the RRC connection to, and the step of handling (520) comprises:

based on a first expected count, FEC, included in the request, determining whether the missing PDUs are available at the first node, wherein the FEC was set based on a sequence number corresponding to a PDCP PDU last received from the second RAN node;
if the missing PDUs are unavailable at the first RAN node, requesting the second RAN node to transmit the missing PDUs to the first RAN node;
establishing an MBS session at the first RAN node for the UE; and
continuing the MBS session by transmitting to the UE the missing PDUs along with MBS data that the first RAN node receives from a Multicast Broadcast User Plane Function, MB-UPF.

6. The method according to claim 4, wherein the first RAN node is one that the UE will resume the RRC connection to, and wherein the step of handling (520) comprises:

if it is determined that the MBS session is unavailable at the first RAN node, requesting the second RAN node to forward MBS data received from a Multicast Broadcast User Plane Function, MB-UPF, to the first RAN node until the first RAN node receives MBS data from the MB-UPF;
establishing an MBS session at the first RAN node for the UE; and
continuing the MBS session by transmitting to the UE the MBS data forwarded by the second RAN node and the MBS data received from the MB-UPF.

7. The method according to claim 6, further comprising:
informing the second RAN node to stop forwarding the MBS data after receiving the MBS data from the MB-UPF.

8. A method for providing service continuity for Multicast and Broadcast Service, MBS, which is carried out by a first radio access network, RAN, node, the method **characterized in** comprising:

receiving (610), from a second RAN node that a User Equipment, UE, will resume a Radio Resource Control, RRC, connection to, a request for retransmitting one or more missing Packet Data Units, PDUs, in MBS data previously transmitted from the first RAN node to the UE while the UE was in a RRC_INACTIVE state; and
handling (620) retransmission of the missing PDUs based on the request ,
wherein the step of handling (620) comprises:

based on a first expected count, FEC, included in the request, determining whether the missing PDUs are available at the first RAN node, wherein the FEC was set based on a sequence number corresponding to a Packet Data Convergence Protocol, PDCP, PDU last received from the first RAN node at the UE; and
if unavailable, requesting a Multicast Broadcast User Plane Function, MB-UPF, or other RAN nodes in the same service area as the first RAN node to transmit the missing PDUs to the second RAN node.

9. A method for providing service continuity for Multicast and Broadcast Service, MBS, which is carried out by a first radio access network, RAN, node, the method **characterized in** comprising:

receiving (710), from a User Equipment, UE, in a request to resume a Radio Resource Control, RRC, connection, a request for retransmitting one or more missing Packet Data Units, PDUs, in MBS data previously transmitted from the first RAN node to the UE while the UE was in a RRC_INACTIVE state;
moving (720) the UE to RRC_CONNECTED; and
retransmitting (730) the missing PDUs to the UE.

10. A method for providing service continuity for Multicast and Broadcast Service, MBS, which is carried out by a first RAN node, the method **characterized in** comprising:

receiving (810), from a User Equipment, UE, in a request to resume a Radio Resource Control, RRC, connection, a request for retransmitting one or more missing Packet Data Units, PDUs, in MBS data previously transmitted from the first RAN node to the UE while the UE was in a RRC_INACTIVE state; and
requesting (820), either during a context retrieve procedure or during a handover preparation phase for a handover from the first RAN node to a second RAN node, the second RAN node to retransmit the missing PDUs to the UE.

11. The method according to claim 10, wherein the requesting (820) is carried out by sending a first expected count, FEC, to the second RAN node, the FEC being set based on a sequence number corresponding to a Packet Data Convergence Protocol, PDCP, PDU last received from the first RAN node.

12. A computer program for providing service continuity for Multicast and Broadcast Service, MBS, the computer program comprising computer instructions for perform the method according to any of claims 1- 11.

13. A User Equipment, UE, configured to operate in accordance with any of claims 1-3.

14. A Radio Access Network, RAN, node configured to operate in accordance with any of claims 4-11.

**Patentansprüche**

1. Verfahren zum Bereitstellen von Dienstkontinuität für Multicast- und Broadcast-Dienst, MBS, das durch eine Benutzereinrichtung, UE, die MBS-Daten empfängt, ausgeführt wird, während sie sich in einem RRC_INACTIVE-Zustand befindet, wobei das Verfahren **dadurch gekennzeichnet ist, dass** es Folgendes umfasst:

Bestimmen (310), ob ein Datenverlust bei MBS-Daten auftritt, die zuvor an die UE von einem ersten Funkzugangsnetz-, RAN-, Knoten übertragen wurden; und
falls der Datenverlust auftritt, Anfordern (320), in einer Anforderung, um eine Funkressourcensteuerungs-, RRC-, Verbindung wiederaufzunehmen, des ersten RAN-Knotens oder eines zweiten RAN-Knotens, eine oder mehrere fehlende Paketdateneinheiten, PDUs, von den MBS-Daten erneut zu übertragen, wobei der erste RAN-Knoten einer ist, der die MBS-Daten zuvor an die UE übertragen hat, und der zweite RAN-Knoten einer ist, zu dem die UE in der Lage ist, die RRC-Verbindung wiederaufzunehmen.

2. Verfahren nach Anspruch 1, wobei der Schritt des Anforderns (320) Folgendes umfasst:

Einstellen einer ersten erwarteten Anzahl, FEC, basierend auf einer Sequenznummer, die einer Paketdatenkonvergenzprotokoll-, PDCP-, PDU, die zuletzt von dem ersten RAN-Knoten empfangen wurde, entspricht; und
wenn die UE zu dem ersten oder zweiten RAN-Knoten zurückkehrt, Senden der FEC an den ersten oder den zweiten RAN-Knoten.

3. Verfahren nach Anspruch 2, wobei eines von Folgenden zutrifft:

(i) die FEC basierend auf der gesamten Sequenznummer eingestellt wird;
(ii) die FEC basierend auf X niedrigstwertige Bits der Sequenznummer eingestellt wird, und der Wert von X wird der UE durch Rundsenden von Systeminformationen oder durch gemeinsame MBS-Konfigurationsinformationen, die an die UE signalisiert werden, mitgeteilt; und

(iii) die FEC gleich der Sequenznummer plus 1 eingestellt wird, falls kein Datenverlust auftritt.

4. Verfahren zum Bereitstellen von Dienstkontinuität für Multicast- und Broadcast-Dienst, MBS, das durch einen ersten Funkzugangsnetz-, RAN-, Knoten ausgeführt wird, wobei das Verfahren **dadurch gekennzeichnet ist, dass** es Folgendes umfasst:

Empfangen (510) von einer Benutzereinrichtung, UE, in einer Anforderung, eine Funkressourcensteuerungs-, RRC-, Verbindung wiederaufzunehmen, einer Anforderung zum erneuten Übertragen von einer oder mehrerer fehlender Paketdateneinheiten, PDUs, in MBS-Daten, die einer MBS-Sitzung zugeordnet sind, die zuvor von einem zweiten RAN-Knoten an die UE übertragen wurde, während sich die UE in einem RRC_INACTIVE-Zustand befand; und
Bearbeiten (520) einer erneuten Übertragung der fehlenden PDUs basierend auf der Anforderung.

5. Verfahren nach Anspruch 4, wobei der erste RAN-Knoten einer ist, zu dem die UE die RRC-Verbindung wiederaufnehmen wird, und der Schritt des Bearbeitens (520) Folgendes umfasst:
basierend auf einer ersten erwarteten Anzahl, FEC, die in der Anforderung beinhaltet ist, Bestimmen, ob die fehlenden PDUs an dem ersten Knoten verfügbar sind, wobei die FEC basierend auf einer Sequenznummer, die einer PDCP-PDU entspricht, die zuletzt von dem zweiten RAN-Knoten empfangen wurde, eingestellt wurde:

falls die fehlenden PDUs an dem ersten RAN-Knoten nicht verfügbar sind, Anfordern des zweiten RAN-Knotens, die fehlenden PDUs an den ersten RAN-Knoten zu übertragen;
Herstellen einer MBS-Sitzung an dem ersten RAN-Knoten für die UE; and
Fortsetzen der MBS-Sitzung durch Übertragen, an die UE, der fehlenden PDUs zusammen mit MBS-Daten, die der erste RAN-Knoten von einer Multicast-Broadcast-Benutzerebenenfunktion, MB-UPF, empfängt.

6. Verfahren nach Anspruch 4, wobei der erste RAN-Knoten einer ist, zu dem die UE die RRC-Verbindung wiederaufnehmen wird, und wobei der Schritt des Bearbeitens (520) Folgendes umfasst:

falls bestimmt wird, dass die MBS-Sitzung an dem ersten RAN-Knoten nicht verfügbar ist, Anfordern des zweiten RAN-Knotens, MBS-Daten, die von einer Multicast-Broadcast-Benutzerebenenfunktion, MB-UPF, empfangen wurden, an den ersten RAN-Knoten weiterzuleiten, bis der erste RAN-Knoten MBS-Daten von der MB-UPF empfängt;
Herstellen einer MBS-Sitzung an dem ersten RAN-Knoten für die UE; und
Fortsetzen der MBS-Sitzung durch Übertragen, an die UE, der MBS-Daten, die durch den zweiten RAN-Knoten weitergeleitet wurden, und der MBS-Daten, die von der MB-UPF empfangen wurden.

7. Verfahren nach Anspruch 6, ferner umfassend:
Informieren des zweiten RAN-Knotens, das Weiterleiten der MBS-Daten nach dem Empfangen der MBS-Daten von der MB-UPF zu beenden.

8. Verfahren zum Bereitstellen von Dienstkontinuität für Multicast- und Broadcast-Dienst, MBS, das durch einen ersten Funkzugangsnetz-, RAN-, Knoten ausgeführt wird, wobei das Verfahren **dadurch gekennzeichnet ist, dass** es Folgendes umfasst:

Empfangen (610), von einem zweiten RAN-Knoten, zu dem eine Benutzereinrichtung, UE, eine Funkressourcensteuerungs-, RRC-, Verbindung wiederaufnehmen wird, einer Anforderung zum erneuten Übertragen einer oder mehrerer fehlender Paketdateneinheiten, PDUs, in MBS-Daten, die zuvor von dem ersten RAN-Knoten an die UE übertragen wurden, während sich die UE in einem RRC_INACTIVE-Zustand befand; und
Bearbeiten (620) einer erneuten Übertragung der fehlenden PDUs basierend auf der Anforderung, wobei der Schritt des Bearbeitens (620) Folgendes umfasst:

basierend auf einer ersten erwarteten Anzahl, FEC, die in der Anforderung beinhaltet ist, Bestimmen, ob die fehlenden PDUs an dem ersten RAN-Knoten verfügbar sind, wobei die FEC basierend auf einer Sequenznummer, die einer Paketdatenkonvergenzprotokoll-, PDCP-, PDU entspricht, die zuletzt von dem ersten RAN-Knoten an der UE empfangen wurde, eingestellt wurde; und
falls nicht verfügbar, Anfordern einer Multicast-Broadcast-Benutzerebenenfunktion, MB-UPF, oder anderer RAN-Knoten in dem gleichen Dienstbereich wie der erste RAN-Knoten, die fehlenden PDUs an den zweiten RAN-Knoten zu übertragen.

9. Verfahren zum Bereitstellen von Dienstkontinuität für Multicast- und Broadcast-Dienst, MBS, das durch einen ersten Funkzugangsnetz-, RAN-, Knoten ausgeführt wird, wobei das Verfahren **dadurch gekennzeichnet ist, dass** es Folgendes umfasst:

Empfangen (710), von einer Benutzereinrichtung, UE, in einer Anforderung, um eine Funkressourcensteuerungs-, RRC-, Verbindung wiederaufzunehmen, einer Anforderung zum erneuten Übertragen einer oder mehrerer fehlender Paketdateneinheiten, PDUs, in MBS-Daten, die zuvor von dem ersten RAN-Knoten an die UE übertragen wurden, während sich die UE in einem RRC_INACTIVE-Zustand befand;
Verschieben (720) der UE in RRC CONNECTED; und
erneutes Übertragen (730) der fehlenden PDUs an die UE.

10. Verfahren zum Bereitstellen von Dienstkontinuität für Multicast- und Broadcast-Dienst, MBS, das durch einen ersten RAN-Knoten ausgeführt wird, wobei das Verfahren **dadurch gekennzeichnet ist, dass** es Folgendes umfasst:

Empfangen (810), von einer Benutzereinrichtung, UE, in einer Anforderung, eine Funkressourcensteuerungs-, RRC-, Verbindung wiederaufzunehmen, einer Anforderung zum erneuten Übertragen einer oder mehrerer fehlender Paketdateneinheiten, PDUs, in MBS-Daten, die zuvor von dem ersten RAN-Knoten an die UE übertragen wurden, während sich die UE in einem RRC_INACTIVE-Zustand befand; und
Anfordern (820), entweder während eines Kontextabrufvorgangs oder während einer Übergabevorbereitungsphase für eine Übergabe von dem ersten RAN-Knoten an einen zweiten RAN-Knoten, des zweiten RAN-Knotens, die fehlenden PDUs erneut an die UE zu übertragen.

11. Verfahren nach Anspruch 10, wobei das Anfordern (820) durch Senden einer ersten erwarteten Anzahl, FEC, an den zweiten RAN-Knoten ausgeführt wird, wobei die FEC basierend auf einer Sequenznummer, die einer Paketdatenkonvergenzprotokoll-, PDCP-, PDU entspricht, die zuletzt von dem ersten RAN-Knoten empfangen wurde, eingestellt wird.

12. Computerprogramm zum Bereitstellen von Dienstkontinuität für Multicast- und Broadcast-Dienst, MBS, wobei das Computerprogramm Computeranweisungen zum Durchführen des Verfahrens nach einem der Ansprüche 1 bis 11 umfasst.

13. Benutzereinrichtung, UE, die dazu konfiguriert ist, nach einem der Ansprüche 1 bis 3 betrieben zu werden.

14. Funkzugangsnetz-, RAN-, Knoten, der dazu konfiguriert ist, nach einem der Ansprüche 4 bis 11 betrieben zu werden.

## Revendications

1. Procédé permettant d'assurer la continuité des services de multidiffusion et de radiodiffusion, MBS, qui est mis en œuvre par un équipement utilisateur, UE, qui reçoit des données MBS alors qu'il est dans un état RRC_INACTIVE, le procédé étant **caractérisé en ce qu'**il comprend :

le fait de déterminer (310) si une perte de données survient dans des données MBS précédemment transmises à l'UE à partir d'un premier noeud de réseau d'accès radio, RAN ; et
si la perte de données survient, la demande (320), dans une demande de rétablissement d'une connexion de commande de ressources radio, RRC, au premier noeud RAN ou à un second noeud RAN de retransmettre une ou plusieurs unités de données par paquets, PDU, manquantes à partir des données MBS, dans lequel le premier noeud RAN est celui qui a précédemment transmis les données MBS à l'UE, et le second noeud RAN est celui avec lequel l'UE est capable de rétablir la connexion RRC.

2. Procédé selon la revendication 1, dans lequel l'étape de demande (320) comprend :

le réglage d'un premier décompte attendu, FEC, sur la base d'un numéro de séquence correspondant à une PDU de protocole de convergence de données par paquets, PDCP, reçue en dernier lieu à partir du premier noeud RAN ; et

lorsque l'UE revient au premier ou au second noeud RAN, l'envoi du FEC au premier ou au second noeud RAN.

3. Procédé selon la revendication 2, dans lequel l'un des éléments suivants :

(i) le FEC est réglé sur la base de l'ensemble du numéro de séquence ;
(ii) le FEC est réglé sur la base de X bits les moins significatifs du numéro de séquence, et la valeur de X est notifiée à l'UE par radiodiffusion via des informations système ou par des informations de configuration MBS communes signalées à l'UE ; et
(iii)le FEC est réglé pour être égal au numéro de séquence plus 1 si aucune perte de données ne survient.

4. Procédé permettant d'assurer la continuité des services de multidiffusion et de radiodiffusion, MBS, qui est mis en œuvre par un premier noeud de réseau d'accès radio, RAN, le procédé étant **caractérisé en ce qu'**il comprend :

la réception (510) à partir d'un équipement utilisateur, UE, dans une demande de rétablissement d'une connexion de commande de ressources radio, RRC, d'une demande de retransmission d'une ou de plusieurs unités de données par paquets, PDU, manquantes dans des données MBS associées à une session MBS précédemment transmises à partir d'un second noeud RAN à l'UE alors que l'UE était dans un état RRC_INACTIVE ; et
le traitement (520) d'une retransmission des PDU manquantes sur la base de la demande.

5. Procédé selon la revendication 4, dans lequel le premier noeud RAN est celui vers lequel l'UE rétablira la connexion RRC, et l'étape de traitement (520) comprend :

sur la base d'un premier décompte attendu, FEC, inclus dans la demande, le fait de déterminer si les PDU manquantes sont disponibles au niveau du premier noeud, dans lequel le FEC a été réglé sur la base d'un numéro de séquence correspondant à une PDU PDCP reçue en dernier lieu à partir du second noeud RAN ;
si les PDU manquantes ne sont pas disponibles au niveau du premier noeud RAN, la demande au second noeud RAN de transmettre les PDU manquantes au premier noeud RAN ;
l'établissement d'une session MBS au niveau du premier noeud RAN pour l'UE ; et
la continuité de la session MBS en transmettant à l'UE les PDU manquantes ainsi que des données MBS que le premier noeud RAN reçoit à partir d'une fonction de plan utilisateur de radiodiffusion- multidiffusion, MB-UPF.

6. Procédé selon la revendication 4, dans lequel le premier noeud RAN est celui vers lequel l'UE rétablira la connexion RRC, et dans lequel l'étape de traitement (520) comprend :

s'il est déterminé que la session MBS n'est pas disponible au niveau du premier noeud RAN, la demande au second noeud RAN de transférer des données MBS reçues à partir d'une fonction de plan utilisateur de radiodiffusion-multidiffusion, MB-UPF, au premier noeud RAN jusqu'à ce que le premier noeud RAN reçoive des données MBS à partir de la MB-UPF ;
l'établissement d'une session MBS au niveau du premier noeud RAN pour l'UE ; et
la continuité de la session MBS en transmettant à l'UE les données MBS transférées par le second noeud RAN et les données MBS reçues à partir de la MB-UPF.

7. Procédé selon la revendication 6, comprenant en outre :
le fait d'indiquer au second noeud RAN d'arrêter de transférer les données MBS après la réception des données MBS à partir de la MB-UPF.

8. Procédé permettant d'assurer la continuité des services de multidiffusion et de radiodiffusion, MBS, qui est mis en œuvre par un premier noeud de réseau d'accès radio, RAN, le procédé étant **caractérisé en ce qu'**il comprend :

la réception (610), à partir d'un second noeud RAN vers lequel un équipement utilisateur, UE, rétablira une connexion de commande de ressources radio, RRC, d'une demande de retransmission d'une ou de plusieurs unités de données par paquets, PDU, manquantes dans des données MBS précédemment transmises à partir du premier noeud RAN à l'UE alors que l'UE était dans un état RRC_INACTIVE ; et
le traitement (620) d'une retransmission des PDU manquantes sur la base de la demande, dans lequel l'étape de traitement (620) comprend :

sur la base d'un premier décompte attendu, FEC, inclus dans la demande, le fait de déterminer si les PDU manquantes sont disponibles au niveau du premier noeud RAN, dans lequel le FEC a été réglé sur la base d'un numéro de séquence correspondant à une PDU de protocole de convergence de données par paquets, PDCP, reçue en dernier lieu à partir du premier noeud RAN au niveau de l'UE ; et

en cas d'indisponibilité, la demande d'une fonction de plan utilisateur de radiodiffusion-multidiffusion, MB-UPF, ou d'autres noeuds RAN dans la même zone de service que le premier noeud RAN pour transmettre les PDU manquantes au second noeud RAN.

9. Procédé permettant d'assurer la continuité des services de multidiffusion et de radiodiffusion, MBS, qui est mis en œuvre par un premier noeud de réseau d'accès radio, RAN, le procédé étant **caractérisé en ce qu'**il comprend :

la réception (710) à partir d'un équipement utilisateur, UE, dans une demande de rétablissement d'une connexion de commande de ressources radio, RRC, d'une demande de retransmission d'une ou de plusieurs unités de données par paquets, PDU, manquantes dans des données MBS précédemment transmises à partir du premier noeud RAN à l'UE alors que l'UE était dans un état RRC_INACTIVE ;
le déplacement (720) de l'UE vers RRC_CONNECTED ; et
la retransmission (730) des PDU manquantes à l'UE.

10. Procédé permettant d'assurer la continuité des services de multidiffusion et de radiodiffusion, MBS, qui est mis en œuvre par un premier noeud RAN, le procédé étant **caractérisé en ce qu'**il comprend :

la réception (810) à partir d'un équipement utilisateur, UE, dans une demande de rétablissement d'une connexion de commande de ressources radio, RRC, d'une demande de retransmission d'une ou de plusieurs unités de données par paquets, PDU, manquantes dans des données MBS précédemment transmises à partir du premier noeud RAN à l'UE alors que l'UE était dans un état RRC_INACTIVE ; et
la demande (820), soit pendant une procédure de récupération de contexte, soit pendant une phase de préparation de transfert pour un transfert du premier noeud RAN à un second noeud RAN, au second noeud RAN de retransmettre les PDU manquantes à l'UE.

11. Procédé selon la revendication 10, dans lequel la demande (820) est mise en œuvre en envoyant un premier décompte attendu, FEC, au second noeud RAN, le FEC étant réglé sur la base d'un numéro de séquence correspondant à une PDU de protocole de convergence de données par paquets, PDCP, reçue en dernier lieu à partir du premier noeud RAN.

12. Programme informatique permettant d'assurer la continuité des services de multidiffusion et de radiodiffusion, MBS, le programme informatique comprenant des instructions informatiques pour mettre en œuvre le procédé selon l'une quelconque des revendications 1 à 11.

13. Équipement utilisateur, UE, configuré pour fonctionner selon l'une quelconque des revendications 1 à 3.

14. Noeud de réseau d'accès radio, RAN, configuré pour fonctionner selon l'une quelconque des revendications 4 à 11.

Fig. 1

Fig. 2

EP 4 245 045 B1

Determining
whether data
loss occurs
in MBS data

310

Requesting source
or target node
to retransmit
missing PDUs

320

## Fig. 3

40

Processor

420

Memory

Computer program | 430

410

## Fig. 4

```
┌─────────────────────┐
│   Receiving from    │
│   UE a request for  │ ─── 510
│   retransmitting    │
│    missing PDUs     │
└─────────────────────┘
          │
          ▼
┌─────────────────────┐
│     Handling        │
│  retransmission of  │ ─── 520
│  the missing PDUs   │
│    based on the     │
│      request        │
└─────────────────────┘
```

Fig. 5

```
┌─────────────────────┐
│   Receiving from a  │
│    target node a    │
│      request for    │ ─── 610
│    retransmitting   │
│     missing PDUs    │
└─────────────────────┘
          │
          ▼
┌─────────────────────┐
│      Handling       │
│  retransmission of  │ ─── 620
│  the missing PDUs   │
│     based on the    │
│       request       │
└─────────────────────┘
```

Fig. 6

Receiving from
UE a request for
retransmitting
missing PDUs — 710

Moving the UE to
RRC_CONNECTED — 720

Retransmitting the
missing PDUs
to the UE — 730

Fig. 7

Receiving from
UE a request for
retransmitting
missing PDUs — 810

Requesting a target
node to retransmit
the missing PDUs
to the UE — 820

Fig. 8

Transmitting MBS
data associated with
an MBS session
to the UE — 910

Releasing the UE to
RRC_INACTIVE — 920

Informing at least
one node a reception
status of the MBS
session at the UE — 930

Fig. 9

1000

Processor — 1020

Memory

Computer program | 1030

1010

Fig. 10

| Determining Unit 1102 | Requesting Unit 1104 |
|---|---|

UE 1100

**Fig. 11**

| Receiving Unit 1202 | Handling Unit 1204 |
|---|---|

RAN Node 1200

**Fig. 12**

| Receiving Unit 1302 | Handling Unit 1304 |
|---|---|

RAN Node 1300

**Fig. 13**

Fig. 14

Fig. 15

Fig. 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020187232 A1

- WO 2019161927 A1